# EUROPÄISCHE PATENTANMELDUNG

(11) **EP 4 177 460 A1**
(43) Veröffentlichungstag der Anmeldung: **10.05.2023**
(21) Anmeldenummer: 21206380.4
(22) Anmeldetag: 04.11.2021
(51) Int. Cl.: F03D 7/02, F03D 17/00, F03D 80/60

(54) **VERFAHREN ZUM EFFIZIENTEN KÜHLEN EINER WINDENERGIEANLAGE**

(71) Anmelder: Wobben Properties GmbH, 26607 Aurich (DE)
(72) Erfinder: Daboul, Hussam, 26624 Südbrookmerland (DE); Volles, Mats, 76189 Karlsruhe (DE); Albedyll, Andreas von, 28209 Bremen (DE)
(74) Vertreter: Eisenführ Speiser

(57) **Zusammenfassung**

Verfahren zum Betreiben einer Windenergieanlage (100, 200), die einen Rotor aufweist und Leistung aus Wind, der eine Windgeschwindigkeit aufweist, in ein elektrisches Versorgungsnetz (220) einspeist, und eine Kühlung einer Komponente der Windenergieanlage (100, 200) steuert, wobei eine Betriebsevaluierung durchgeführt wird, bei der ein Betriebszustand oder eine Betriebszustandsänderung evaluiert werden, und die Kühlung in Abhängigkeit von einer Komponententemperatur und zusätzlich in Abhängigkeit von der Betriebsevaluierung gesteuert wird.

## Beschreibung

Die vorliegende Erfindung betrifft ein Verfahren zum Betreiben einer Windenergieanlage und es betrifft eine entsprechende Windenergieanlage.

Windenergieanlagen erzeugen Leistung aus Wind und speisen diese in ein elektrisches Versorgungsnetz ein. Zum Erhöhen der Effizienz des dafür eingesetzten Generators kann eine Kühlung vorgesehen sein. die Kühlung erreicht dann, dass der Generator nicht zu heiß wird und dadurch einen optimalen Arbeitspunkt nicht oder nicht zu stark verlässt. Die Kühlung kann aber auch verhindern, dass ein Generator überhitzt und dadurch beschädigt wird. Diese und auch nachfolgende Erläuterungen können auch für andere Komponenten gelten, wie generatorseitige und/oder netzseitige Wechselrichter bzw. Umrichter.

Besonders effizient sind aktive Kühlungen, die allerdings selbst Leistung benötigen und dadurch die erreichte Effizienzerhöhung wieder etwas verschlechtern können.

Es kann daher vorgesehen sein, eine solche aktive Kühlung nicht permanent anzusteuern. Dafür kann vorgesehen sein, eine Temperatur zu überwachen und einen Schwellwert für eine solche Temperatur, insbesondere eine Generatortemperatur, festzulegen, ab dem gekühlt wird, ab dem also eine solche Kühlung angesteuert wird.

Aber auch bei einer solchen temperaturabhängigen Kühlung hat diese einen gewissen Eigenbedarf an Leistung und kann dadurch die Effizienz wieder verschlechtern und auch eine maximal abgebbare Leistung verringern.

Der vorliegenden Erfindung liegt somit die Aufgabe zugrunde, zumindest eines der oben genannten Probleme zu adressieren. Insbesondere soll eine Lösung vorgeschlagen werden, bei der negative Einflüsse der Kühlung auf die Leistungserzeugung oder -abgabe soweit wie möglich reduziert werden. Zumindest soll zu bisher bekannten Lösungen eine alternative Lösung vorgeschlagen werden.

Erfindungsgemäß wird ein Verfahren gemäß Anspruch 1 vorgeschlagen. Das Verfahren betrifft somit das Betreiben einer Windenergieanlage, die einen Rotor aufweist. Sie erzeugt Leistung aus Wind, der eine Windgeschwindigkeit aufweist, und speist diese Leistung in ein elektrisches Versorgungsnetz ein. Außerdem steuert die Windenergieanlage eine Kühlung einer Komponente der Windenergieanlage. Insoweit kann diese Kühlung auch als aktive Kühlung bezeichnet werden. Das Steuern der Kühlung kann insbesondere ein Steuern und damit Betreiben wenigstens einer Pumpe zum Pumpen von Kühlflüssigkeit umfassen und außerdem oder alternativ das Steuern und damit Betreiben wenigstens eines Gebläses bzw. einer Gebläseeinheit. Eine solche Gebläseeinheit kann unmittelbar einen zur Kühlung vorgesehenen Luftstrom erzeugen und bewegen, und/oder Luft zur Kühlung durch einen Rückkühler treiben. Besonders bei der Verwendung eines solchen Rückkühlers kommt in Betracht, dass das Steuern der Kühlung das Steuern wenigstens einer Pumpe und außerdem das Steuern wenigstens einer Gebläseeinheit umfasst. Die Pumpe kann dazu Kühlflüssigkeit durch die Komponente zum Kühlen pumpen und die Kühlflüssigkeit kann in einem Rückkühler wieder gekühlt werden. Zur Verbesserung der Kühlung der Kühlflüssigkeit im Rückkühler kann wenigstens eine Gebläseeinheit vorgesehen sein. Eine Gebläseeinheit kann synonym auch einfach als Gebläse, Lüfter, Lüftereinheit oder Ventilator bezeichnet werden.

Weiterhin ist vorgesehen, eine Betriebsevaluierung durchzuführen, bei der ein Betriebszustand oder eine Betriebszustandsänderung evaluiert wird. Verschiedene Beispiele einer Betriebsevaluierung werden nachfolgend noch erläutert. Ein einfaches Beispiel kann darin bestehen, dass als Betriebsevaluierung evaluiert wird, ob die Windenergieanlage Nennleistung einspeist.

Es wird weiter vorgeschlagen, dass die Kühlung in Abhängigkeit von einer Komponententemperatur und zusätzlich in Abhängigkeit von der Betriebsevaluierung gesteuert wird. Die Steuerung der Kühlung wird also wenigstens in Abhängigkeit von zwei Kriterien durchgeführt.

Insbesondere wird vorgeschlagen, dass von der Komponententemperatur und zusätzlich von der Betriebsevaluierung abhängt, ob überhaupt die Kühlung gesteuert wird, oder ob sie inaktiv bzw. passiv bleibt. Es kann aber auch in Abhängigkeit von der Komponententemperatur und zusätzlich der Betriebsevaluierung die Kühlung mit unterschiedlicher Stärke gesteuert werden. Hier kommt insbesondere das Steuern einer Drehzahl einer Pumpe und/oder einer Drehzahl einer Gebläseeinheit in Betracht.

In jedem Fall liegt der Gedanke zu Grunde, dass die Komponententemperatur ein gutes Kriterium ist, um davon abhängig die Kühlung zu steuern, dass aber durch Berücksichtigung wenigstens eines weiteren Kriteriums eine Verbesserung der Effizienz der Windenergieanlage erreicht werden kann. Arbeitet die Windenergieanlage bspw. mit Nennleistung, speist also Nennleistung ein, kann die Kühlung, die auch synonym als Kühlsystem bezeichnet werden kann, auch bei geringen Komponententemperaturen arbeiten. Damit erhöht sich der Wirkungsgrad in diesem Volllastbetrieb, wenn die Anlage also Nennleistung produziert, aber auch im Teillastbereich, wenn der Wind schwächt, wenn also die Windgeschwindigkeit absinkt, insbesondere unter eine Nennwindgeschwindigkeit absinkt. Das liegt daran, dass dann die Komponententemperatur kleiner ist als im Fall, wenn zuvor, also noch im Volllastbereich, die Kühlung nicht gearbeitet hätte. Produziert die Windenergieanlage aber Nennleistung, ist ausreichend Leistung zum Betreiben des Kühlsystems vorhanden, sodass vorgeschlagen wird, dann auch bei geringen Temperaturen das Kühlsystem zu betreiben, um dadurch den optimalen Wirkungsgrad zu erzielen.

Insbesondere ist die Kühlung zum Kühlen des Generators der Windenergieanlage vorgesehen und besonders dann wird als Komponententemperatur eine Generatortemperatur verwendet. Es kommen aber auch andere Komponenten in Betracht, wie ein generatorseitiger Wechselrichter, der also den Generator ansteuert. Ebenfalls kommt eine Kühlung an einem netzseitigen Wechselrichter in Betracht, der also elektrische Leistung in das elektrische Versorgungsnetz einspeist bzw. dafür entsprechenden Strom erzeugt, um nur zwei weitere wichtige Beispiele zu nennen.

Gemäß einem Aspekt wird somit vorgeschlagen, dass als Kühlung einer Komponente der Windenergieanlage eine Kühlung eines Generators der Windenergieanlage und/oder eine Kühlung einer Umrichtereinheit der Windenergieanlage vorgesehen ist und gesteuert wird. Die Umrichtereinheit kann eine Einspeiseeinheit sein zum Einspeisen elektrischer Leistung in das elektrische Versorgungsnetz, oder ein Teil einer Einspeiseeinheit sein. Die Umrichtereinheit kann auch ein generatorseitiger Wechselrichter sein, zum Ansteuern des Generators, oder ein Teil davon. Der generatorseitige Wechselrichter kann auch als Gleichrichter ausgebildet sein bzw. bezeichnet werden. Die Umrichtereinheit kann auch den generatorseitigen Wechselrichter und die Einspeiseeinheit zusammen bilden, oder umfassen. All diese Komponenten, nämlich der generatorseitige Wechselrichter, die Einspeiseeinheit und/oder der Gleichrichter, können unter dem Begriff des Umrichters oder der Umrichtereinheit zusammengefasst werden. Als Komponententemperatur wird somit eine Generatortemperatur bzw. eine Umrichtertemperatur verwendet. Die Umrichtertemperatur steht somit repräsentativ für eine Temperatur der Einspeiseeinheit oder des generatorseitigen Wechselrichters. Zum Kühlen des Generators wird somit die Generatortemperatur verwendet und zum Kühlen der Umrichtereinheit die Umrichtertemperatur.

Die Komponententemperatur und damit auch die Generatortemperatur oder die Umrichtertemperatur können auch indirekt erfasst und/oder berücksichtigt werden, indem die Temperatur eines Kühlmediums erfasst oder berücksichtigt wird, das die betreffende Komponente kühlt.

Hier wurde erkannt, dass besonders von dem Generator und/oder der Umrichtereinheit eine Effizienz der Erzeugung elektrischer Leistung aus Wind und das Einspeisen dieser elektrischen Leistung in das elektrische Versorgungsnetz von der Effizienz des Generators und/oder der Umrichtereinheit abhängt. Daher ist es sinnvoll, besonders für diese Komponenten eine effiziente Kühlung einzusetzen bzw. die Effizienz einer vorhandenen Kühlung zu verbessern.

Gemäß einem Aspekt wird vorgeschlagen, dass als Betriebsevaluierung wenigstens eine der folgenden Evaluierungen durchgeführt wird. Werden mehrere der Evaluierungen durchgeführt, so können sie zusammen die Betriebsevaluierung bilden. Eine Betriebsevaluierung ist insoweit auch eine Betrachtung mehrerer Eigenschaften oder Aspekte des Betriebes der Windenergieanlage.

Als eine Evaluierung wird vorgeschlagen, zu prüfen, ob die Windenergieanlage Nennleistung einspeist. Dieser Punkt wurde oben bereits als Beispiel genannt. Hier ist besonders vorgesehen, dass die Kühlung bzw. das Kühlsystem unabhängig von der Komponententemperatur mit voller Leistung arbeitet. Eine Kühlung wird also auch bei geringer Komponententemperatur vorgeschlagen. Die Kühlung wird dabei dennoch in Abhängigkeit von der Komponententemperatur gesteuert, weil diese trotzdem erfasst wird und insbesondere auch vorgeschlagen wird, dass das Verfahren durchgängig die Komponententemperatur erfasst und davon abhängig die Kühlung steuert. Zur Frage, ob bzw. wie die Kühlung gesteuert wird, wird somit die Komponententemperatur und die Betriebsevaluierung abgefragt. Sie bilden die Eingangsgrößen für die Entscheidung, ob und ggf. wie die Kühlung gesteuert wird. Das schließt nicht aus, dass bereits ein Kriterium dazu führen kann, dass die Kühlung gesteuert wird.

Jedenfalls wurde erkannt, dass dann, wenn die Anlage Nennleistung erzeugt, ausreichend Leistung zur Verfügung steht und daher wird vorgeschlagen, in jedem Fall die Kühlung zu steuern, um dadurch den Wirkungsgrad bzw. die Effizienz der betreffenden Komponente, also insbesondere des Generators und/oder der Umrichtereinheit, zu erhöhen.

Gemäß einer Evaluierung wird überprüft, ob die Windenergieanlage in einem leistungsreduzierten Betrieb arbeitet. In diesem Fall darf die Anlage, unabhängig vom Wind, also der Windgeschwindigkeit, nur eine maximale vordefinierte Leistung produzieren, darüber also nicht hinausgehen. Die Windenergieanlage erzeugt also keine Nennleistung, sondern ist auf einen niedrigeren Wert begrenzt. Eine solche Vorgabe kann bspw. gegeben werden, damit Schall oder andere kritische Merkmale einen entsprechenden Grenzwert nicht überschreiten. Für einen solchen Fall ist auch vorgesehen, dass das Kühlsystem mit Vollleistung dreht, also Kühlpumpen und/oder Gebläse mit voller Leistung angesteuert werden.

Hier wurde besonders erkannt, dass in diesem reduzierten Betrieb mehr Leistung vorhanden ist und erzeugt werden kann, als eingespeist werden darf. Diese Leistung bzw. ein Teil davon kann dafür verwendet werden, die Kühlung zu steuern. Die Windenergieanlage, insbesondere der Generator und/oder die Umrichtereinheit arbeiten dann in einem besseren Arbeitspunkt. Ein solcher besserer Arbeitspunkt kann auch beinhalten, dass weniger Verschleiß und/oder weniger Risiko beim Betreiben der Windenergieanlage auftritt.

Hier wurde auch erkannt, dass dadurch die Windenergieanlage bessere Startbedingungen hat, also niedrigere Temperaturen aufweist, was auch zu einem höheren Wirkungsgrad führt, wenn ein normaler Betrieb mit optimaler Leistungsausbeute wieder möglich ist. Auch hier wurde erkannt, dass eine Temperaturveränderung vergleichsweise langsam abläuft und damit die Kühlung im leistungsreduzierten Modus auch nach seinem Ende noch Wirkung im sich anschließenden unreduzierten Betrieb entfalten kann.

Als eine weitere mögliche Evaluierung wird geprüft, ob die Windenergieanlage in einem Inertia-Betrieb arbeitet, bei dem zur Erhöhung der eingespeisten Leistung zusätzlich zur aktuell aus Wind erzeugten elektrischen Leistung elektrische Leistung aus kinetischer Energie des Rotors eingespeist wird.

Ein solcher Inertia-Betrieb kann auch als ein Betrieb momentaner Leistungserhöhung, insbesondere als Betrieb momentaner Leistungserhöhung mit Leistung aus kinetischer Energie synonym bezeichnet werden. Bei einem solchen Inertia-Betrieb geht es insbesondere darum, eine Momentanreserve dem elektrischen Versorgungsnetz bereitzustellen. Hierbei kann die eingespeiste Leistung kurzfristig, insbesondere in einem Bereich von weniger als 5 Sekunden, insbesondere weniger als 1 Sekunde, um wenigstens 5%, insbesondere um wenigstens 10% erhöht werden, und zwar über eine in dem Moment aus Wind erzeugbare und einspeisbare Leistung.

Hier wurde besonders erkannt, dass ein solcher Inertia-Betrieb nur für einen kurzen Zeitraum anhält, insbesondere für weniger als 1 Minute, insbesondere weniger als 30 Sekunden. In dieser Zeit soll möglichst viel zusätzliche Leistung und damit möglichst viel zusätzliche Energie in das elektrische Versorgungsnetz eingespeist werden. Diese zusätzliche Leistung wird nicht aus Wind erzeugt, sondern aus der kinetischen Energie des Rotors genommen, sodass ein hoher Wirkungsgrad dafür nicht wichtig ist. Es wurde erkannt, dass stattdessen viel wichtiger ist, auch die Leistung mit ins elektrische Versorgungsnetz einzuspeisen, die andernfalls zur Kühlung benötigt werden würde. Es wurde auch erkannt, dass in dieser kurzen Zeit, für die ein solcher Inertia-Betrieb durchgeführt wird, die Temperatur ohnehin nicht stark steigen kann. Besonders die thermische Trägkeit des Generators verhindert in der genannten kurzen Zeit von weniger als 1 Minute, insbesondere weniger als 30 Sekunden einen signifikanten Temperaturanstieg des Generators. Für andere zu kühlende Komponenten einer Windenergieanlage kann ebenfalls gelten, dass die Komponententemperatur nicht sehr schnell ansteigt.

Ebenfalls wurde erkannt, dass solche Inertia-Betriebe vergleichsweise selten sind, sodass durch den Verzicht auf die Kühlung auch keine signifikante Verschlechterung der Lebensdauer der Windenergieanlage zu erwarten ist.

Dadurch, dass die zum Kühlen benötigte Leistung bzw. Energie dann mehr in das elektrische Versorgungsnetz eingespeist werden kann, kann diese entsprechend weniger aus der kinetischen Energie des Rotors genommen werden, wodurch wiederum eine etwas geringere Abbremsung des Rotors resultiert. Damit kann wiederum erreicht werden, dass das Risiko, dass die Windenergieanlage ungewollt anhält, also abgewürgt wird, verringert wird.

Gemäß einer Evaluierung kann überprüft werden, ob und/oder in welchem Umfang eine Veränderung, insbesondere Verringerung der eingespeisten Leistung prädiziert wird. Hier wurde besonders erkannt, dass bei einer Verringerung der eingespeisten Leistung auch mit einem geringeren Temperaturaufkommen zu rechnen ist und spätestens dann eine Kühlung nicht mehr erforderlich ist und die Leistung zum Kühlen besser dazu verwendet wird, ins elektrische Versorgungsnetz eingespeist zu werden. Dazu wurde besonders erkannt, dass bereits im Falle einer prädizierten Leistungsabnahme das Abschalten der Kühlung oder das Verringern der Kühlung, sinnvoll ist, da dann schon erkennbar ist, dass sie nicht benötigt wird und die Leistung besser eingespeist werden kann, sofern die Windenergieanlage noch keine Nennleistung erreicht hat.

Umgekehrt kann aber auch die Prädiktion einer Leistungserhöhung zu einem Einschalten oder Nichtabschalten der Steuerung der Kühlung führen.

Für diese aber auch die übrigen Evaluierungen ist aber zu berücksichtigen, dass zusätzlich die Komponententemperatur berücksichtigt wird. Auch bei einem Konzept, bei dem die Betriebsevaluierung zu einem Reduzieren oder Abschalten der Kühlung führen kann, kann aber eine sehr hohe Komponententemperatur zu einem Einschalten oder Weiterführen der Kühlung führen, wenn dadurch eine Beschädigung verhindert oder vermieden wird.

Als eine Evaluierung kann überprüft werden, ob und in welchem Umfang eine Veränderung von Wetterzuständen prädiziert wird.

Auch hier liegt die Erkenntnis zu Grunde, dass eine intelligente bzw. vorausschauende Kühlsystemsteuerung möglich ist. Dazu kann ein Wetter- oder Netzmodell eine bestimmte Prognose liefern, die für eine solche intelligente bzw. vorausschauende Kühlsystemsteuerung die Grundlage ist. Außerdem oder ergänzend kommt auch ein Machine Learning oder auch Künstliche Intelligenz in Betracht, um solche Prognosen zu liefern. Auch dies kann bspw. dazu führen, dass prädiziert wird, dass die Windgeschwindigkeit sinken wird, z.B. unter 6 m/s in den nächsten 12 Stunden, was dazu führen kann, dass das Kühlsystem abgeschaltet werden kann, und somit mehr Energie in das elektrische Versorgungsnetz eingespeist werden kann.

Die Prädiktion von Wetterzuständen und/oder von Veränderungen von Wetterzuständen kann aber auch das Prädizieren einer Außentemperatur und insbesondere die Veränderung einer Außentemperatur beinhalten. Wird also bspw. erkannt, dass die Außentemperatur stark absinken wird, kann dies schon vorher ein Grund sein, das Kühlsystem abzuschalten oder zu reduzieren, also das Steuern der Kühlung zu beenden oder zu verringern.

Als eine Evaluierung kann auch überprüft werden, ob eine Verringerung der Windgeschwindigkeit prädiziert wird, insbesondere eine Verringerung auf einen Wert unterhalb einer Nennwindgeschwindigkeit. Wird prädiziert, dass die Windgeschwindigkeit unter Nennwindgeschwindigkeit absinkt, kann daraus auch auf ein baldiges Ende eines Volllastbetriebs geschlossen werden und damit auf ein Absenken der Leistung unter Nennleistung. Solange die Windenergieanlage noch im Volllastbetrieb arbeitet und ausreichende Leistung verfügbar ist, kann eine Kühlsteuerung vorgesehen und sinnvoll sein, um für den erwarteten Betrieb mit weniger Leistung, also im Teillastbetrieb, einen hohen Wirkungsgrad durch geringe Temperatur als Startbedingung in diesem Teillastbetrieb zu schaffen. In dem Moment, in dem die Leistung dann absinkt, kann allerdings die Kühlung sofort beendet oder reduziert werden, um dann die dadurch frei gewordene Leistung besser einzuspeisen.

Durch eine solche Prädiktion kann besonders erreicht werden, dass die Kühlung gesteuert, das Kühlsystem also eingeschaltet ist, wenn ausreichend Leistung vorhanden ist, der hohe Wirkungsgrad durch geringe Temperatur aber ausgenutzt wird, wenn die Kühlung nicht mehr aktiv ist. Dann kann also der hohe Wirkungsgrad ausgenutzt werden und trotzdem die zur Kühlung benötigte Leistung mit eingespeist werden, da in diesem Moment die Kühlung nicht mehr aktiv ist.

Als eine Evaluierung kann auch geprüft werden, ob ein Leistungsverbrauch der Kühlung eine Leistungserhöhung der Komponente, insbesondere des Generators und/oder der Umrichtereinheit, bedingt durch eine durch die Kühlung erreichte Wirkungsgraderhöhung, überschreitet. Es wird also hier vorgeschlagen, den möglichen Leistungsverbrauch der Kühlung der Leistungserhöhung durch Effizienzerhöhung gegenüberzustellen. Verbraucht die Kühlung mehr Leistung, als durch die Erhöhung des Wirkungsgrades zusätzlich erzeugt werden könnte, kann auf die Kühlung, also das Steuern der Kühlung bzw. des Kühlsystems, verzichtet werden.

Aber hier können zusätzliche Überlegungen einer oder mehrerer der übrigen Evaluierungen mit kombiniert werden. Besonders dann, wenn der Unterschied zwischen Leistungsverbrauch der Kühlung und erzielbarer Leistungserhöhung gering ist, kann geprüft werden, welche Situation in naher Zukunft prädiziert wird. Davon abhängig kann entschieden werden, ob das Ansteuern der Kühlung für diese nahe Zukunft sinnvoll ist oder nicht.

In diesem Sinne können alle Evaluierungen kombiniert, also kombiniert betrachtet werden. Insbesondere werden zwei Evaluierungen oder noch mehr Evaluierungen zusammen ausgewertet.

Als Evaluierung kann auch geprüft werden, in welchem Zusammenhang ein Leistungsverbrauch der Kühlung zu einer Leistungserhöhung der Komponente, insbesondere des Generators und/oder der Umrichtereinheit steht, bedingt durch eine durch die Kühlung erreichte Wirkungsgraderhöhung.

Auch hier wird ein Zusammenhang zwischen Leistungsverbrauch der Kühlung und Leistungserhöhung durch die Wirkungsgraderhöhung gegenübergestellt. Hier wird besonders vorgeschlagen, generell einen Zusammenhang aufzustellen, insbesondere einen Quotienten zwischen Leistungsverbrauch der Kühlung und erreichbarer Leistungserhöhung. Ist dieser Quotient, um bei diesem Beispiel zu bleiben, kleiner als 1, ist das Steuern der Kühlung grundsätzlich sinnvoll, andernfalls ist es weniger sinnvoll. Aber auch hier können zusätzliche Überlegungen eine Rolle spielen, insbesondere zusätzliche Evaluierungen berücksichtigt werden. Natürlich wird auch hier die Komponententemperatur berücksichtigt. Ist sie besonders hoch, kann zum Schutz der Windenergieanlage und/oder zur Vermeidung einer zu starken Lebensdauerreduzierung dennoch die Entscheidung fallen, die Kühlung zu steuern.

Gemäß einem Aspekt wird vorgeschlagen, dass zur Steuerung der Kühlung wenigstens ein Gebläse und/oder eine Pumpe eines Kühlsystems der Windenergieanlage gesteuert wird, und insbesondere die Kühlung so gesteuert wird, dass das Gebläse und/oder die Pumpe des Kühlsystems in einem Nennbetrieb, in einem reduzierten Betrieb oder garnicht betrieben werden. Das Steuern der Kühlung wird somit über das Gebläse oder die Pumpe realisiert, wie oben schon beschrieben wurde. Insbesondere kann nach den genannten Kriterien zwischen den Zuständen gewechselt werden, dass Gebläse und/oder Pumpe im Nennbetrieb arbeiten oder gar nicht betrieben werden. Im Nennbetrieb wird die bestmögliche Kühlung erreicht und dann, wenn die Kühlung gar nicht betrieben wird, benötigt sie auch keine Leistung, die somit zur Einspeisung zur Verfügung steht. Dennoch wurde erkannt, dass in manchen Fällen auch eine geringe Kühlung sinnvoll sein kann, ohne aber volle Leistung, also Nennleistung, des Kühlsystems aufzubringen.

Ein reduzierter Betrieb kann besonders dann vorgesehen sein, wenn die dafür benötigte reduzierte Leistung geringer ist als eine Leistungserhöhung durch den verbesserten Arbeitspunkt.

Gemäß einem Aspekt wird vorgeschlagen, dass die Kühlung so gesteuert wird, dass sie nicht betrieben wird, wenn die Komponententemperatur unterhalb einer ersten Grenztemperatur liegt. Ist also die Komponente, insbesondere der Generator und/oder die Umrichtereinheit, ohnehin sehr kalt, braucht auch die Kühlung nicht gesteuert zu werden.

Weiter wird vorgeschlagen, das die Kühlung in Abhängigkeit von der Betriebsevaluierung gesteuert wird, insbesondere davon abhängig in einem Nennbetrieb, in einem reduzierten Betrieb oder gar nicht betrieben wird, wenn die Komponententemperatur zwischen der ersten Grenztemperatur und einer zweiten Grenztemperatur liegt, die größer als die erste Grenztemperatur ist. In diesem Fall, wenn die Temperatur also zwischen diesen beiden Grenzwerten liegt, kommt es entscheidend auf die Betriebsevaluierung an. Es wurde erkannt, dass die Komponententemperatur dann weder so gering ist, dass jegliche Kühlung unnötig wäre, noch dass sie so hoch ist, dass eine Kühlung zum Schutz der Anlage in jedem Fall durchgeführt werden sollte.

Außerdem oder alternativ wird vorgeschlagen, dass die Kühlung mit maximaler Leistung betrieben wird, wenn die Komponententemperatur oberhalb der zweiten Grenztemperatur liegt. Hier wurde also erkannt, dass bei so hohen Temperaturen eine Kühlung in jedem Fall erfolgen sollte, um eine Beschädigung der Windenergieanlage oder zumindest das verringern der Lebensdauer der Windenergieanlage zu vermeiden.

Gemäß einem Aspekt wird vorgeschlagen, dass die Kühlung so gesteuert wird, dass sie in einem Nennbetrieb betrieben wird, wenn die Windenergieanlage Nennleistung einspeist, wenn die Windenergieanlage in einem leistungsreduzierten Betrieb arbeitet, wenn eine Verringerung der Windgeschwindigkeit prädiziert wird, insbesondere wenn eine Verringerung auf einen Wert unterhalb einer Nennwindgeschwindigkeit prädiziert wird, und/oder wenn eine Verringerung der eingespeisten Leistung prädiziert wird. Diese Kriterien ergeben sich besonders aus der oben erläuterten Betriebsevaluierung. Dort wurden auch schon Aspekte der Strategie erläutert.

Jedenfalls wurde erkannt, dass bei Einspeisung von Nennleistung ausreichend Leistung für Kühlung vorhanden ist und es daher sinnvoll ist, durch Kühlung einen hohen Wirkungsgrad zu erreichen. In einem leistungsreduzierten Betrieb ist ohnehin überschüssige Leistung zum Betreiben der Kühlung vorhanden, sodass das vorgeschlagen wird. Bei erwarteter Verringerung der Windgeschwindigkeit wird durch das vorherige Kühlen ein guter Betriebspunkt vorbereitet. Gleiches gilt bei einer erwarteten Verringerung der eingespeisten Leistung.

Vorzugsweise wird die Kühlung so gesteuert, dass sie nicht oder mit verringerter Leistung betrieben wird, wenn, bezogen auf einen Nennbetrieb der Kühlung, ein Leistungsverbrauch der Kühlung eine Leistungserhöhung der Komponente, bedingt durch eine durch eine solche Kühlung erreichte Wirkungsgraderhöhung, überschreitet. Verbraucht die Kühlung also mehr Leistung als sie durch Wirkungsgraderhöhung gewinnt, wird sie ausgeschaltet oder zumindest reduziert. Auch dies kann jeweils ein Ergebnis der Betriebsevaluierung sein.

Außerdem oder alternativ wird vorgeschlagen, dass die Kühlung so gesteuert wird, dass sie nicht betrieben wird, wenn sie in einem Inertia-Betrieb arbeitet, bei dem zur Erhöhung der eingespeisten Leistung zusätzlich zu aktuell aus Wind erzeugten elektrischen Leistung elektrische Leistung aus kinetischer Energie des Rotors eingespeist wird. Für diesen Inertia-Betrieb wurde besonders erkannt, dass er kurz ist und Kühlung für diesen kurzen Moment entbehrlich ist und die dadurch frei werdende Leistung besser zur Einspeisung verwendet werden sollte, um dadurch das elektrische Versorgungnetz zu stützen.

Gemäß einem Aspekt wird vorgeschlagen, dass die Betriebsevaluierung in Abhängigkeit von einem Standort der Windenergieanlage durchgeführt wird. Insbesondere wird vorgeschlagen, dass die Betriebsevaluierung in Abhängigkeit von wenigstens einem den Standort der Windenergieanlage kennzeichnenden Standortparameter durchgeführt wird. Insbesondere ist vorgesehen, dass die Betriebsevaluierung in Abhängigkeit von einer Höhenlage des Standortes und/oder in Abhängigkeit von einer Durchschnittstemperatur des Standortes und/oder in Abhängigkeit von einer Durchschnittswindgeschwindigkeit des Standortes durchgeführt wird. Außerdem oder alternativ ist vorgesehen, dass der wenigstens eine Standortparameter in Abhängigkeit von der Höhenlage des Standortes und/oder von der Durchschnittstemperatur des Standortes und/oder von der Durchschnittswindgeschwindigkeit des Standortes bestimmt wird.

Somit wird vorgeschlagen, die Standorte nach wenigstens einem der genannten Kriterien zu unterscheiden und die Betriebsevaluierung daran jeweils anzupassen. Besonders die Durchschnittstemperatur und die Durchschnittswindgeschwindigkeit können dafür jeweils über einen langen Zeitraum, insbesondere über ein Jahr aufgenommen werden. Eine Betrachtung nur für einen besonderen Zeitraum wie eine Jahreszeit, oder nur tagsüber oder nachts kommt auch in Betracht. Bei der Berücksichtigung von Temperatur und/oder Windgeschwindigkeit zur Betriebsevaluierung oder als unmittelbares Kriterium zum Steuern der Kühlung werden aber aktuelle Messwerte verwendet. Hier kommen insbesondere Mittelwerte eines kurzen Zeitraumes wie einer Minute oder 10 Minuten in Betracht.

Hier wurde besonders erkannt, dass je nach Standort grundsätzlich unterschiedliche Verhaltensweisen und/oder Besonderheiten erwartet werden dürfen, die sich auch auf die Kühlung und ihre Wirkung auswirken können. Eine Höhenlage hat besonders Auswirkung auf den Luftdruck und damit auch auf die Luftdichte an dem Standort. Eine geringe Dichte kann dazu führen, dass die Windenergieanlage mit einer angepassten Drehzahlkennlinie betrieben wird und andere Drehzahlen zu anderen Temperaturverläufen besonders im Generator führen können. Die Temperaturentwicklung im Generator durch den Betrieb kann verändert sein und auch eine durch Drehung bedingte eigene Kühlung kann verändert sein.

Eine erhöhte oder verringerte Durchschnittstemperatur an dem Standort beeinflusst insbesondere den Kühlbedarf, der entsprechend erhöht oder verringert ist. So kann bei einer erhöhten Durchschnittstemperatur eher eine Kühlung vorgesehen sein, als bei einer verringerten Durchschnittstemperatur. Es kommt auch in Betracht, dass die erste und zweite Grenztemperatur in Abhängigkeit von der Durchschnittstemperatur des Standortes gewählt wird.

Eine Durchschnittswindgeschwindigkeit des Standortes hat besonders Auswirkung darauf, wie die Kühlung in Abhängigkeit einer geschätzten Veränderung der Windgeschwindigkeit gesteuert wird. Besonders kommt in Betracht, dass bei einer erhöhten Durchschnittswindgeschwindigkeit häufiger eine Kühlung gesteuert wird, um einen guten Wirkungsgrad zu erzielen, weil dafür häufiger ausreichend Leistung aus Wind vorhanden ist.

Es kommt in Betracht, dass diese Kriterien, also insbesondere Höhenlage, Durchschnittstemperatur und Durchschnittswindgeschwindigkeit des Standortes, unmittelbar ausgewertet werden und/oder in einen Standortparameter einfließen. Insbesondere kann jedes dieser Kriterien einen Standortparameter bilden oder verändern. Bspw. kann für die Höhenlage ein Standortparameter vorgesehen sein, der Werte im Bereich von 0 bis 1 annimmt, wobei der Wert 1 einer normalen Höhenlage entspricht, bei der ein normaler Luftdruck etwa auf Meeresspiegelhöhe wirkt. Gleiches kann für die Durchschnittstemperatur und die Durchschnittswindgeschwindigkeit vorgesehen sein, wobei dort ein Parameter vorgesehen sein kann, der ebenfalls im Normalfall den Wert 1 aufweist, allerdings sowohl darüber als auch darunter liegen kann, also beispielsweise von 0,5 bis 2 schwanken kann, je nach Durchschnittstemperatur. Gleiches gilt für die Durchschnittswindgeschwindigkeit.

Gemäß einem Aspekt wird vorgeschlagen, in Abhängigkeit von der Steuerung der Kühlung ein Belastungsprofil der Kühlung, insbesondere eines des wenigstens einen Gebläses und/oder der wenigstens einen Pumpe zu ermitteln, und außerdem oder alternativ in Abhängigkeit von der Steuerung der Kühlung und optional in Abhängigkeit von dem ermittelten Belastungsprofil eine Leistungsaufnahme der Kühlung insbesondere des Gebläses und/oder der Pumpe zu ermitteln.

Ein solches Belastungsprofil zeigt besonders an, bei was für einer Kühlaktivität wieviel Leistung dafür benötigt wird, nämlich um besonders Gebläse und/oder Pumpe zu steuern. Dadurch kann der Kühlleistung, die also angibt, wieviel Wärme von der jeweiligen Komponente abgeführt werden kann, eine Aufnahmeleistung zugeordnet werden, die also angibt, wieviel elektrische Leistung die Kühlung dafür jeweils benötigt. Davon abhängig kann situationsbedingt beurteilt und entschieden werden, ob die Kühlung angesteuert wird oder nicht, oder ob sie reduziert angesteuert wird. Besonders zum Ermitteln und Anwenden, also Auswerten der Betriebsevaluierungen kann ein solches Belastungsprofil verwendet werden. Besonders kann dadurch auch ein Zusammenhang zwischen Kühlergebnis und dafür benötigter Leistung hergestellt werden und damit kann ein Zusammenhang zwischen erzielbarer Wirkungsgraderhöhung und dafür aufzubringender Leistung hergestellt werden. Davon abhängig ist dann beurteilbar, ob das Steuern einer Kühlung in der jeweiligen Situation sinnvoll ist oder nicht. Repräsentativ oder vereinfachend kann eine Drehzahl des Gebläses oder der Pumpe für die Kühlleistung stehen.

Durch die Bestimmung des Belastungsprofils ist bei Kenntnis der übrigen Zusammenhänge auch eine automatisierte Umsetzung realisierbar. Insbesondere kann automatisch und damit in einer entsprechend vorbereiteten Regelung die Kühlung in Abhängigkeit von der Komponententemperatur und in Abhängigkeit von der Betriebsevaluierung gesteuert werden.

Es kommt aber auch in Betracht, basierend auf dem Belastungsprofil bzw. den Belastungsprofilen Entscheidungstabellen zu hinterlegen, die auf die Betriebsevaluierungen in Abhängigkeit von der Komponententemperatur angewendet werden können.

Gemäß einem Aspekt wird vorgeschlagen, in Abhängigkeit von einer ermittelten Leistungsaufnahme der Kühlung eine jährliche Energieerzeugung zu ermitteln und die Steuerung der Kühlung so durchzuführen, dass die jährliche Energieerzeugung maximiert wird.

Hier wurde besonders erkannt, dass durch die Steuerung der Kühlung in Abhängigkeit von der Komponententemperatur und in Abhängigkeit von der Betriebsevaluierung eine situationsabhängige Steuerung der Kühlung ermöglicht wird. Dadurch entsteht ein Freiheitsgrad dieser Kühlungssteuerung. Je nach Anwendung der Betriebsevaluierung, aber auch je nach Wahl der ersten bis zweiten Grenztemperatur kann die Kühlung häufiger oder seltener gesteuert, also eingeschaltet werden. Auch eine Variation der Leistungsaufnahme der Kühlung bei nur reduzierter Ansteuerung der Kühlung kommt in Betracht. Dadurch kann die Leistungsaufnahme der Kühlung variiert werden.

Durch die Vorgabe der Betriebsevaluierungen und ihre Anwendung auf die Steuerung der Kühlung ist auch die zu erwartende Leistungsaufnahme für die Steuerung der Kühlung vorbestimmbar. Eine zu erwartende jährliche Leistungsaufnahme kann also bestimmt werden. Die Verhaltensweise kann variiert werden, insbesondere die Grenztemperaturen und die Betriebsevaluierung können verändert werden, was zu einem veränderten Ergebnis führt, sowohl hinsichtlich der Leistungsaufnahme für die Kühlung als auch hinsichtlich der Wirkungsgradveränderungen durch die Kühlung. Dadurch können solche Veränderungen die Leistungsbilanz verändern und das ist vorbestimmbar, insbesondere für ein Jahr vorbestimmbar.

Es ist also vorbestimmbar, wie Variationen der Evaluierungen und/oder der Grenztemperaturen die jährliche Energieerzeugung verändern und damit können auch solche Einstellungen gefunden werden, bei denen die jährliche Energieerzeugung maximiert ist. Zur Vorbestimmung kann besonders eine Prädiktion verwendet werden, die nachfolgend beschrieben wird.

Besonders kann ein vorgebbarer Zusammenhang zwischen der Steuerung der Kühlung und der Betriebsevaluierung variiert werden. Ein solcher vorgebbarer Zusammenhang kann beispielsweise vorgeben, welche prädizierte Windgeschwindigkeitsveränderung und/oder prädizierte Leistungserhöhung zu einem Steuern, also Starten der Kühlung führt, und welcher noch nicht dazu führt. Auch eine etwaige reduzierte Ansteuerung der Kühlung kann in einem solchen Zusammenhang vorgegeben werden. Dieser Zusammenhang kann dann variiert werden, indem beispielsweise schon bei einer prädizierten geringen Windgeschwindigkeitsverringerung die Kühlung angesteuert wird, oder erst bei einer hohen Windgeschwindigkeitsverringerung. Im Zusammenhang mit einem Wettermodell für den Standort für das gesamte Jahr können dann Betrieb und Leistungsaufnahme der Steuerung der Kühlung vorbestimmt werden.

Gemäß einem Aspekt wird vorgeschlagen, dass zur Prädiktion einer Veränderung, insbesondere Verringerung der eingespeisten Leistung, ein Netzmodell verwendet wird, das ein Verhalten des elektrischen Versorgungsnetzes abbildet, und/oder zur Prädiktion einer Veränderung von Wetterzuständen ein Wettermodell verwendet wird, und dass optional das Netzmodell und das Wettermodell zusammen verwendet werden, um eine Veränderung der Einspeisung zu prädizieren.

Hier wurde besonders erkannt, dass einerseits das Wetter, andererseits aber auch ein Verhalten des elektrischen Versorgungsnetzes Einfluss auf die eingespeiste Leistung haben kann. Ein Netzmodell kann dabei insbesondere abbilden, ob Situationen auftreten, bei denen die Wirkleistungseinspeisung reduziert werden muss, insbesondere begrenzt werden muss. Eine solche Reduzierung oder Begrenzung der Wirkleistungseinspeisung kann sich besonders aus Frequenzschwankungen des elektrischen Versorgungsnetzes ergeben. Die Frequenzschwankungen wiederum können sich aus unausgeglichenen Leistungsbilanzen zwischen einspeisenden Erzeugern und konsumierenden Verbrauchern ergeben. All diese Verhalten, einschließlich auch der Netztopologie, können in einem solchen Netzmodell abgebildet werden und daraus kann quasi antizipiert werden, wie oft eine Leistungsreduzierung resultieren kann, also wie oft eine solche durch Vorschriften erzwungen werden kann.

Die Prädiktion einer Veränderung von Wetterzuständen mittels eines Wettermodells kann besonders Veränderungen der Windgeschwindigkeit vorhersagen bzw. vorhersagen, welche Windgeschwindigkeiten insgesamt für ein Jahr zu erwarten sind. Entsprechend kann auch vorher erkannt und für eine Analyse der jährlichen Energieproduktion verwendet werden, wie oft eine Windenergieanlage erwartungsgemäß Nennleistung einspeist, wie oft sie im Teillastbetrieb arbeitet, und wie oft sie dazwischen wechselt. Die Prädiktion einer Veränderung von Wetterzuständen unter Verwendung eines Wettermodells kann aber auch als weitere Information eine Schallwettersituation ergeben. Eine Schallwettersituation kann angeben, wie gut und in welche Richtung sich Schall ausbreitet. An Standorten, an denen bei einem zu hohen Schallpegel die Windenergieanlage in ihrem Betrieb begrenzt werden muss, kann das eine wichtige Rolle für die Vorhersage bilden. Es kann vorhergesagt werden, in welchem Umfang eine Leistungsbegrenzung aus Schallschutzgründen zu erwarten ist und daraus kann basierend auf der entsprechenden Evaluierung, also in Abhängigkeit von der Betriebsevaluierung ein entsprechend zugeordnetes Verhalten der Steuerung der Kühlung abgeleitet werden.

Besonders wird vorgeschlagen, das Netzmodell und das Wettermodell zusammen zu verwenden. Damit können all die vorstehend erläuterten Prädiktionen zusammen berücksichtigt werden. Als Synergieeffekt kommt allerdings hinzu, dass das Wetterverhalten auch das elektrische Versorgungsnetz beeinflussen kann. Werden beispielsweise großräumig steigende Windgeschwindigkeiten vorhergesagt, in einer Situation, in der wenige Verbraucher aktiv sind, kann sich daraus auch eine netzseitig vorgeschriebene Reduzierung der einzuspeisenden Leistung ergeben. Es kann also eine Drosselung der Windenergieanlage vorhergesagt werden. Dies ist nur durch eine Kombination dieser beiden Modelle prädizierbar.

Erfindungsgemäß wird zudem eine Windenergieanlage vorgeschlagen. Diese Windenergieanlage weist einen Rotor, einen Generator, eine Einspeiseeinheit und wenigstens eine steuerbare Kühlung zum Kühlen einer Komponente der Windenergieanlage auf, wobei die Windenergieanlage dazu vorbereitet ist, elektrische Leistung in ein elektrisches Versorgungsnetz einzuspeisen. Die Windenergieanlage kann dazu die Einspeiseeinheit verwenden, die so angesteuert wird, dass sie elektrische Leistung aus dem Generator entnimmt, der bei Wind durch den Rotor angetrieben wird, und diese elektrische Leistung in das elektrische Versorgungsnetz einspeist. Dazu kann die Einspeiseeinheit direkt oder indirekt einen in das elektrische Versorgungsnetz einzuspeisenden elektrischen Strom erzeugen bzw. steuern.

Besonders können der Generator und/oder die Einspeiseeinheit jeweils eine Komponente der Windenergieanlage bilden, die jeweils mit der wenigstens einen steuerbaren Kühlung gekühlt werden. Als zu kühlende Komponente kommt auch eine Umrichtereinheit in Betracht, die die Einspeiseeinheit oder einen Teil davon bilden kann. Die Umrichtereinheit oder eine weitere Umrichtereinheit kann auch als generatorseitiger Wechselrichter ausgebildet sein, um den Generator anzusteuern. Die Einspeiseeinheit kann auch gleichzeitig zum Ansteuern des Generators und zum Einspeisen elektrischer Leistung un das elektrische Versorgungsnetz ausgebildet sein. Dazu kann sie einen oder mehrere Umrichtereinheiten aufweisen.

Außerdem weist die Windenergieanlage eine Anlagensteuerung auf, die zum Steuern der Windenergieanlage vorgesehen ist. Eine solche Anlagensteuerung kann auch die Einspeiseeinheit ansteuern bzw. den Betrieb der Einspeiseeinheit steuern und führen. Ebenfalls kann die Anlagensteuerung die steuerbare Kühlung ansteuern, insbesondere die steuerbare Kühlung ein- oder ausschalten und ggf. eine reduzierte Steuerung der Kühlung durchführen.

Die Windenergieanlage, insbesondere die Anlagensteuerung, ist dazu vorbereitet, ein Verfahren gemäß einem der vorstehend beschriebenen Aspekte auszuführen. Dazu kann das Verfahren auf der Anlagensteuerung implementiert sein, insbesondere als entsprechendes Computerprogramm. Die Anlagensteuerung kann dazu auch entsprechende Eingangs-und Ausgangsschnittstellen aufweisen, über die sie insbesondere Wetterinformationen und/oder Informationen des elektrischen Versorgungsnetzes empfangen kann, um diese dann auszuwerten.

Nachfolgend wird die Erfindung exemplarisch anhand von Ausführungsformen unter Bezugnahme auf die begleitenden Figuren näher erläutert.
- Figur 1: zeigt eine Windenergieanlage in einer perspektivischen Darstellung.
- Figur 2: zeigt eine Steuerungsstruktur zur Kühlung in einer schematischen Darstellung.
- Figur 3: zeigt schematisch eine Belastungskennlinie eines Gebläses.

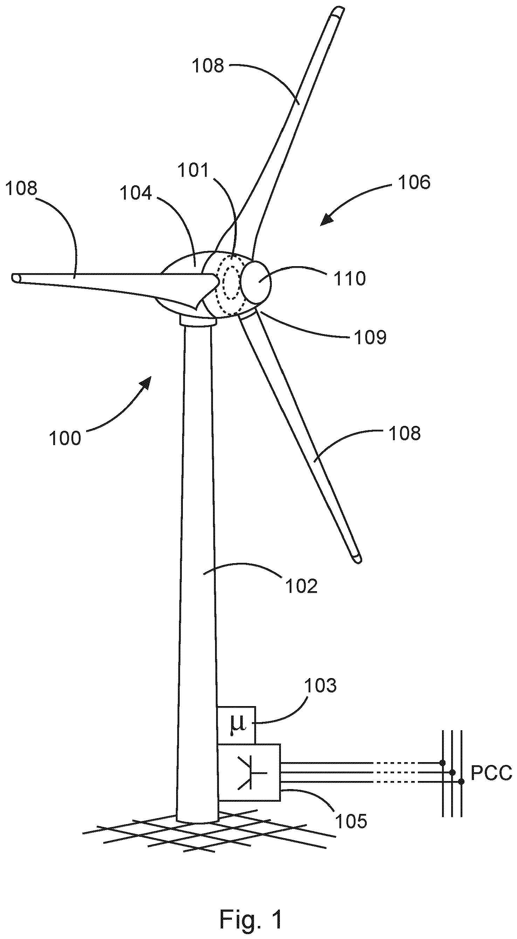

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Die Einspeiseeinheit kann eine Umrichtereinheit umfassen. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

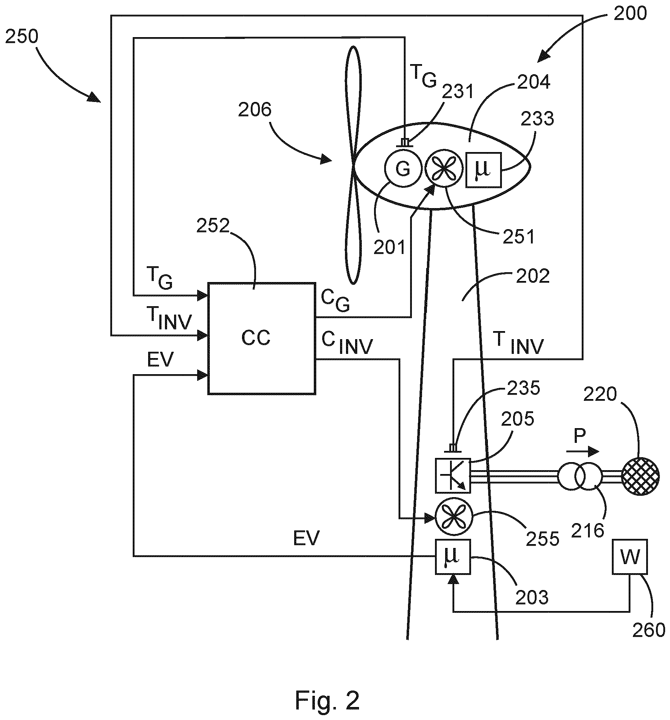

**Figur 2** zeigt eine Steuerungsstruktur 250 für eine Kühlung in einer schematischen Darstellung. Darin ist eine Windenergieanlage 200 schematisch dargestellt, die der Windenergieanlage 100 der Figur 1 entsprechen kann. Diese Windenergieanlage 200 ist symbolisch in die Steuerungsstruktur 250 eingebunden. Die Windenergieanlage 200 weist eine Turm 202 mit darauf angeordneter Gondel 204 nebst aerodynamischem Rotor 206 auf. Der aerodynamische Rotor 206 treibt einen Generator 201 an, der dadurch Leistung erzeugt. Die so erzeugte elektrische Leistung, abzüglich verbrauchter Leistung, kann über eine Einspeiseeinheit 205 in ein elektrisches Versorgungsnetz 220 eingespeist werden, üblicherweise über einen Transformator 216. Zum Steuern der Einspeiseeinheit 205 und ggf. auch zum Steuern weiterer Elemente der Windenergieanlage kann eine Anlagensteuerung 203 vorgesehen sein.

Besonders der Generator 201 und die Einspeiseeinheit 205 können sich im Betrieb erwärmen. Dabei kann die Einspeiseeinheit einen Umrichter bzw. eine Umrichtereinheit aufweisen, die sich erwärmt und bei Bedarf gekühlt werden soll. Daher sind hier exemplarisch eine Umrichterkühlung 255 zum Kühlen der Einspeiseeinheit 205 und eine Generatorkühlung 251 zum Kühlen des Generators 201 vorgesehen. Für den Generator 201 und die Generatorkühlung 251 und etwaige weitere Elemente kann in der Gondel 204 auch eine Teilsteuerung 233 vorgesehen sein. Jegliche Steuerungen können aber auch in der Anlagensteuerung 203 gebündelt sein.

Der Generator 201 und die Einspeiseeinheit 205, bzw. die darin umfasste Umrichtereinheit, bilden somit zu kühlende Komponenten, die aber auch repräsentativ für weitere zu kühlende Komponenten stehen können. Als weitere zu kühlende Komponente kommt beispielsweise ein Gleichstromsteller in Betracht, wenn der Generator ein fremderregter Synchrongenerator ist. Außerdem kann der Generator durch einen generatorseitigen Wechselrichter angesteuert werden, der Teil der Einspeiseeinheit 205 sein kann, oder der ein separates Element sein kann und auch eine zu kühlende Komponente darstellen kann. Grundsätzlich können auch diverse Aktuatoren zu kühlende Komponenten bilden, wenn sie dazu neigen, im Betrieb zu heiß zu werden.

Um eine Temperatur an den zu kühlenden Komponenten zu erfassen, hier also am Generator 201 und an der Einspeiseeinheit 205 sind entsprechende Temperatursensoren vorgesehen, hier nämlich der Umrichtertemperatursensor 235 an der Einspeiseeinheit 205 und der Generatortemperatursensor 231 an dem Generator 201. Beide Temperaturen, also die Umrichtertemperatur T_{INV} der Einspeiseeinheit bzw. der darin umfassten Umrichtereinheit und die Generatortemperatur T_{G} am Generator, werden somit erfasst und an eine Kühlungssteuerung 252 übertragen. Die Kühlungssteuerung 252 erhält als wenigstens eine Eingangsgröße auch ein Betriebsevaluierungssignal EV.

Die Kühlungssteuerung 252 bestimmt für die Generatorkühlung 251 und die Umrichterkühlung 255, die auch als Kühlung der Einspeiseeinheit oder Einspeisekühlung bezeichnet werden kann, jeweils ein Kühlungssteuerungssignal, nämlich ein Generatorkühlungssteuerungssignal C_{G}, das die Generatorkühlung 251 ansteuert, und ein Umrichterkühlungssteuerungssignal C_{INV}, mit dem die Umrichterkühlung 255 angesteuert wird.

Die Kühlungssteuerung 252 steuert die Kühlung somit in Abhängigkeit von der betreffenden Komponententemperatur, hier also der Generatortemperatur T_{G} bzw. der Umrichtertemperatur T_{INV}. Außerdem wird die Kühlung in Abhängigkeit von der Betriebsevaluierung gesteuert.

Die Betriebsevaluierung kann in der Anlagensteuerung 203 durchgeführt werden, was die schematische Steuerungsstruktur 250 andeutet. Die Betriebsevaluierung kann aber auch anderswo durchgeführt werden. Die Betriebsevaluierung kann diverse Eingangsgrößen berücksichtigen, was in der Figur 2 der Übersichtlichkeit halber nicht eingezeichnet ist. Besonders kann evaluiert werden, ob die Windenergieanlage Nennleistung einspeist, ob die Windenergieanlage in einem leistungsreduzierten Betrieb arbeitet, ob die Windenergieanlage in einem Inertia-Betrieb arbeitet, ob eine Veränderung, insbesondere Verringerung der eingespeisten Leistung prädiziert wird, um einige Beispiele zu nennen. Aus den Betriebsevaluierungen wird dann das Betriebsevaluierungssignal EV bestimmt und das kann die jeweilige Evaluierung als Ja oder Nein kodiert enthalten und ggf. als 0 oder 1 übertragen werden. Es kommen aber auch Evaluierungen in Betracht, die einen quantitativen Inhalt haben, insbesondere in welcher Höhe prädizierte Veränderungen erwartet werden, wie die Veränderung einer Windgeschwindigkeit und/oder Abgabeleistung und/oder Effizienz der jeweils zu kühlenden Komponente. Somit kann das Evaluierungssignal EV auch quantitative Werte enthalten.

Die Ansteuerung der einzelnen Kühlungen, also hier der Generatorkühlung 251 und der Umrichterkühlung 255 kann im einfachsten Fall ein An- oder Ausschaltsignal sein. Besonders kommt aber eine Steuerung auch der Höhe nach in Betracht. Dazu können besonders Gebläse, wie sie auch in der Figur 2 zur Generatorkühlung 251 und Umrichterkühlung 255 angedeutet sind, quantitativ angesteuert werden. Dazu kann insbesondere ein Drehzahlsollwert an die jeweilige Kühlung, damit also an das jeweilige Gebläse gegeben werden.

Es kommt aber bspw. auch in Betracht, dass bei einer Flüssigkeitskühlung eine Umlaufpumpe angesteuert wird. Auch diese kann über eine Drehzahlvorgabe gesteuert werden.

Sind die erfassten Temperaturen, hier also die Generatortemperatur T_{G} und die Umrichtertemperatur T_{INV} niedrig, und ist nur eine einfache Ansteuerung der Kühlung durch An- oder Ausschalten vorgesehen, so können die Steuersignale für die zu kühlenden Komponenten gleich sein. Das Generatorsteuersignal C_{G} und das Umrichtersteuersignal C_{INV} könnten dann also gleich sein und zum gleichen Kriterium und damit zum gleichen Zeitpunkt umspringen.

Vorzugsweise erfolgt aber eine individuelle Ansteuerung. Zum einen können sich unterschiedliche Temperaturen ergeben, die bei der einen zu kühlenden Komponente eine Kühlung notwendig machen, wohingegen die andere Komponente möglicherweise noch eine vergleichsweise geringe Temperatur aufweist. Es kommt aber auch in Betracht, dass besonders bei einer Steuerung mittels quantitativer Steuersignale, also insbesondere bei einer Drehzahlsteuerung der Lüfter, Gebläse oder Pumpen diese jeweils individuell ausfallen. Das kann auch mit einem individuellen Belastungsprofil der jeweiligen Kühlung zusammenhängen.

Vorzugsweise erhalten also die Generatorkühlung 251 und die Umrichterkühlung 255 jeweils unterschiedliche individuelle Drehzahlwerte.

Zur Durchführung der Evaluierung können Betriebsgrößen der Windenergieanlage berücksichtigt werden, besonders Betriebsgrößen des Generators 201 und der Einspeiseeinheit 205 bzw. einer in der Einspeiseeinheit 205 umfassten Umrichtereinheit und/oder einer anderen Umrichtereinheit. Für die Berücksichtigung prädizierter Größen oder prädizierter Situationen kommt in Betracht, ein externes Signal zu empfangen, insbesondere eine Wettervorhersage, oder zumindest eine Windvorhersage. Das ist durch den Wettervorhersageblock 260 symbolisiert, der entsprechende Wettervorhersagen oder zumindest Windvorhersagen an die Windenergieanlage 200 überträgt. Symbolisch ist dafür eine Übertragung an die Anlagensteuerung 203 dargestellt.

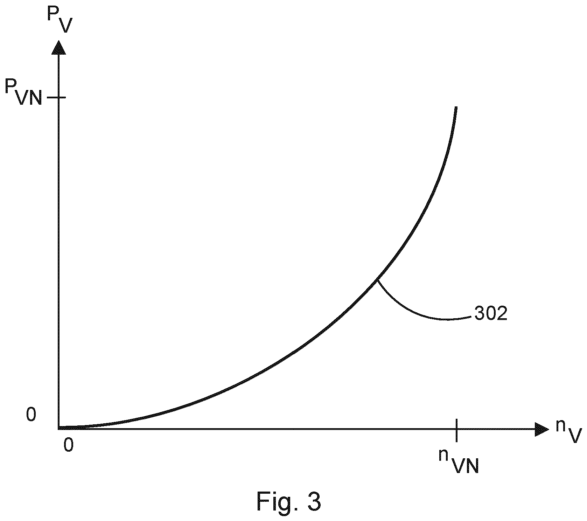

**Figur 3** zeigt exemplarisch und veranschaulichend eine Drehzahl-Leistungskurve als Belastungsprofil eines Gebläses, z.B. der Generatorkühlung 251 der Figur 2. Ähnlich kann auch ein Belastungsprofil einer Pumpe einer Flüssigkeitskühlung ausgebildet sein.

Das Diagramm zeigt somit auf der Abszisse die Drehzahl nv des Gebläses und an der Ordinate die Leistung Pv, die das Gebläse dabei aufnimmt. Die Drehzahlleistungskennlinie 302 beginnt somit bei 0, wenn das Gebläse ausgeschaltet ist, ist also die Drehzahl 0 und die Leistungsaufnahme ebenfalls. Sie reicht bis zu einer Nenndrehzahl n_{VN} des Gebläses, die sie idealerweise bei Nennleistung P_{VN} des Gebläses erreicht.

Zu erkennen ist, dass der Zusammenhang zwischen Drehzahl des Gebläses und der Aufnahmeleistung nichtlinear ist. Vielmehr nimmt die aufgenommene Leistung überproportional bei höheren Drehzahlen zu. Daher kann es sinnvoll sein, ein solches Belastungsprofil aufzunehmen, um beurteilen zu können, welche Drehzahl der jeweiligen Kühlung zu welcher Verbrauchsleistung führt. Diese Verbrauchsleistung kann dann gegenübergestellt werden mit der Leistung, die durch Erhöhung des Wirkungsgrades durch die Kühlung erwartet wird. Solange die Verbrauchsleistung geringer ist, kann es sinnvoll sein, die Kühlung in dem entsprechenden Arbeitspunkt zu betreiben.

Es kommt aber auch in Betracht, dass die reine Betrachtung eines stationären Arbeitspunktes nicht ausreichend ist, und vielmehr die Verbrauchsleistung in manchen Fällen nicht von Relevanz sein muss, nämlich dann, wenn ausreichend Leistung vorhanden ist, also überschüssige Leistung aus Wind vorhanden ist, und eine Erhöhung der abzugebenden Leistung erst später dadurch erzielbar ist, dass die vorherige Kühlung durch eine entsprechend kühle Komponente noch nachwirkt.

Erfindungsgemäß wurde insbesondere Folgendes erkannt:
In der Regel wird, bzw. bisher wurde ein Kühlsystem einer Komponente bzw. ein Komponentenkomplex hauptsächlich nach der Temperatur dieser Komponente gesteuert. Damit soll eine Übererhitzung vermieden werden. Aus Sicht der Maximierung der jährlichen Energieproduktion (AEP) kann die Steuerung des Kühlsystems so erweitert werden, dass in bestimmten Fällen (Nennleistung, leistungsreduzierten Modus, Inertia-Betrieb, usw.) mehr Energie produziert wird im Vergleich zum normalen Betrieb.

Dazu wird daher vorgeschlagen, solche Situationen zu prüfen. Dazu wird die Betriebsevaluierung vorgeschlagen.

Besonders kann das zur Maximierung des Wirkungsgrades und somit der jährlichen Energieproduktion (AEP) einer Windenergieanlage dienen.

Dazu wird auch Folgendes vorgeschlagen:
Eine Entwicklung eines Codes, also eines Computercodes bzw. Computerprogramms, zur Beurteilung/Berechnung von AEP. Als Vorteil ergibt sich auch eine "standortspezifische" Lösung bei der Verwendung von dieser Idee gegenüber der normalen Steuerung des Kühlsystems.

Der Code wird besonders so entwickelt, dass derselbe Code in der Lage ist, die neuen Belastungsprofile von Lüftern/Pumpen berechnen zu können, damit eine Überbelastung oder Überschreiten eines Betriebsalters der Komponenten ausgeschlossen oder minimiert werden kann.

## Patentansprüche

1. Verfahren zum Betreiben einer Windenergieanlage (100, 200), die einen Rotor aufweist und Leistung aus Wind, der eine Windgeschwindigkeit aufweist, in ein elektrisches Versorgungsnetz (220) einspeist, und eine Kühlung einer Komponente der Windenergieanlage (100, 200) steuert, wobei
- eine Betriebsevaluierung durchgeführt wird, bei der ein Betriebszustand oder eine Betriebszustandsänderung evaluiert werden, und
- die Kühlung
- in Abhängigkeit von einer Komponententemperatur und zusätzlich
- in Abhängigkeit von der Betriebsevaluierung
gesteuert wird.

2. Verfahren nach Anspruch 1, **dadurch gekennzeichnet, dass**
- als Kühlung einer Komponente der Windenergieanlage (100, 200) eine Kühlung (251) eines Generators und/oder eine Kühlung (255) einer Umrichtereinheit gesteuert wird und
- als Komponententemperatur eine Generatortemperatur (T_{G}) bzw. eine Umrichtertemperatur (T_{INV}) verwendet wird.

3. Verfahren nach Anspruch 1 oder 2, **dadurch gekennzeichnet, dass**
als Betriebsevaluierung wenigstens eine Evaluierung durchgeführt wird aus der Liste ausweisend
- ob die Windenergieanlage (100, 200) Nennleistung einspeist,
- ob die Windenergieanlage (100, 200) in einem leistungsreduzierten Betrieb arbeitet,
- ob die Windenergieanlage (100, 200) in einem Inertia-Betrieb arbeitet, bei dem zur Erhöhung der eingespeisten Leistung zusätzlich zur aktuell aus Wind erzeugten elektrischen Leistung elektrische Leistung aus kinetischer Energie des Rotors eingespeist wird,
- ob und/oder in welchem Umfang eine Veränderung, insbesondere Verringerung der eingespeisten Leistung prädiziert wird,
- ob und/oder in welchem Umfang eine Veränderung von Wetterzuständen prädiziert wird,
- ob eine Verringerung der Windgeschwindigkeit prädiziert wird, insbesondere eine Verringerung auf einen Wert unterhalb einer Nennwindgeschwindigkeit,
- ob ein Leistungsverbrauch der Kühlung eine Leistungserhöhung der Komponente, insbesondere des Generators und/oder der Umrichtereinheit, bedingt durch eine durch die Kühlung erreichte Wirkungsgraderhöhung, überschreitet und
- in welchem Zusammenhang ein Leistungsverbrauch der Kühlung zu einer Leistungserhöhung der Komponente, insbesondere des Generators und/oder der Umrichtereinheit, bedingt durch eine durch die Kühlung erreichte Wirkungsgraderhöhung, steht.

4. Verfahren nach einem der vorstehenden Ansprüche, **dadurch gekennzeichnet, dass**
- zur Steuerung der Kühlung wenigstens ein Gebläse und/oder eine Pumpe eines Kühlsystems der Windenergieanlage (100, 200) gesteuert wird, und insbesondere
- die Kühlung so gesteuert wird, dass das Gebläse und/oder die Pumpe des Kühlsystems in einem Nennbetrieb, in einem reduzierten Betrieb oder gar nicht betrieben werden.

5. Verfahren nach einem der vorstehenden Ansprüche, **dadurch gekennzeichnet, dass** die Kühlung so gesteuert wird, dass sie
- nicht betrieben wird, wenn die Komponententemperatur unterhalb einer ersten Grenztemperatur liegt,
- in Abhängigkeit von der Betriebsevaluierung gesteuert wird, insbesondere davon abhängig in einem Nennbetrieb, in einem reduzierten Betrieb oder gar nicht betrieben wird, wenn die Komponententemperatur zwischen der ersten Grenztemperatur und einer zweiten Grenztemperatur liegt, die größer als die erste Grenztemperatur ist, und/oder
- mit maximaler Leistung betrieben wird, wenn die Komponententemperatur oberhalb der zweiten Grenztemperatur liegt.

6. Verfahren nach einem der vorstehenden Ansprüche, **dadurch gekennzeichnet, dass** die Kühlung so gesteuert wird, dass sie
- in einem Nennbetrieb betrieben wird, wenn
- die Windenergieanlage (100, 200) Nennleistung einspeist,
- die Windenergieanlage (100, 200) in einem leistungsreduzierten Betrieb arbeitet,
- eine Verringerung der Windgeschwindigkeit prädiziert wird, insbesondere wenn eine Verringerung auf einen Wert unterhalb einer Nennwindgeschwindigkeit prädiziert wird, und/oder
- eine Verringerung der eingespeisten Leistung prädiziert wird und/oder dass die Kühlung so gesteuert wird, dass sie
- nicht oder mit verringerter Leistung betrieben wird, wenn, bezogen auf einen Nennbetrieb der Kühlung, ein Leistungsverbrauch der Kühlung eine Leistungserhöhung der Komponente, bedingt durch eine durch eine solche Kühlung erreichte Wirkungsgraderhöhung, überschreitet, und/oder, dass
die Kühlung so gesteuert wird, dass sie
- nicht betrieben wird, wenn sie in einem Inertia-Betrieb arbeitet, bei dem zur Erhöhung der eingespeisten Leistung zusätzlich zur aktuell aus Wind erzeugten elektrischen Leistung elektrische Leistung aus kinetischer Energie des Rotors eingespeist wird.

7. Verfahren nach einem der vorstehenden Ansprüche, **dadurch gekennzeichnet, dass**
- die Betriebsevaluierung in Abhängigkeit von einem Standort der Windenergieanlage (100, 200) durchgeführt wird, insbesondere, dass
- die Betriebsevaluierung in Abhängigkeit von wenigstens einem den Standort der Windenergieanlage (100, 200) kennzeichnenden Standortparameter durchgeführt wird, wobei insbesondere vorgesehen ist, dass
- die Betriebsevaluierung in Abhängigkeit von
- einer Höhenlage,
- einer Durchschnittstemperatur und/oder
- einer Durchschnittswindgeschwindigkeit
des Standortes durchgeführt wird, und/oder dass
- der wenigstens eine Standortparameter in Abhängigkeit von
- der Höhenlage,
- der Durchschnittstemperatur und/oder
- der Durchschnittswindgeschwindigkeit
des Standortes bestimmt wird.

8. Verfahren nach einem der vorstehenden Ansprüche, **dadurch gekennzeichnet, dass**
- in Abhängigkeit von der Steuerung der Kühlung ein Belastungsprofil der Kühlung, insbesondere eines bzw. des wenigstens einen Gebläses und/oder einer bzw. der wenigstens einen Pumpe ermittelt wird, und/oder
- in Abhängigkeit von der Steuerung der Kühlung und optional in Abhängigkeit von dem in Abhängigkeit von der Steuerung der Kühlung ermittelten Belastungsprofil, eine Leistungsaufnahme der Kühlung, insbesondere eines bzw. des wenigstens einen Gebläses und/oder einer bzw. der wenigstens einen Pumpe ermittelt wird.

9. Verfahren nach einem der vorstehenden Ansprüche, **dadurch gekennzeichnet, dass**
- in Abhängigkeit von einer bzw. der ermittelten Leistungsaufnahme der Kühlung eine jährliche Energieerzeugung ermittelt wird, und
- die Steuerung der Kühlung so erfolgt, dass die jährliche Energieerzeugung maximiert wird, wobei insbesondere zur Maximierung der jährlichen Energieerzeugung
- eine bzw. die erste und/oder zweite Grenztemperatur verändert werden, und/oder
- ein vorgebbarer Zusammenhang zwischen der Steuerung der Kühlung und der Betriebsevaluierung variiert wird.

10. Verfahren nach einem der vorstehenden Ansprüche, **dadurch gekennzeichnet, dass**
- zur Prädiktion einer Veränderung, insbesondere Verringerung der eingespeisten Leistung, ein Netzmodell verwendet wird, das ein Verhalten des elektrischen Versorgungsnetzes (220) abbildet, und/oder
- zur Prädiktion einer Veränderung von Wetterzuständen ein Wettermodell verwendet wird, und dass optional
- das Netzmodell und das Wettermodell zusammen verwendet werden, um eine Veränderung der Einspeisung zu prädizieren.

11. Windenergieanlage (100, 200) mit einem Rotor (106, 206), einem Generator (101, 201), einer Einspeiseeinheit (205) und wenigstens einer steuerbaren Kühlung zum Kühlen einer Komponente der Windenergieanlage (100, 200), wobei
- die Windenergieanlage (100, 200) dazu vorbereitet ist, elektrische Leistung in ein elektrisches Versorgungsnetz (220) einzuspeisen, und wobei
- die Windenergieanlage (100, 200) eine Anlagensteuerung (103, 203) aufweist, zum Steuern der Windenergieanlage (100, 200), wobei
- die Windenergieanlage (100, 200), insbesondere die Anlagensteuerung (103, 203), dazu vorbereitet ist, ein Verfahren nach einem der Ansprüche 1 bis 10 auszuführen.
